# EUROPEAN PATENT APPLICATION

(11) **EP 4 707 984 A1**
(43) Date of publication of application: **11.03.2026**
(21) Application number: 24209610.5
(22) Date of filing: 29.10.2024
(51) Int. Cl.: G05D 1/246, G05D 107/00, G05D 105/10, G05D 111/50, G05D 111/67, G05D 1/242, G01C 21/00, G05D 1/628, G05D 109/15, G05D 111/10

(54) **LOCALIZING METHOD FOR ROBOTIC POOL CLEANER AND ROBOTIC POOL CLEANER**

(30) Priority: 05.09.2024 CN 202411245717
(71) Applicant: Shenzhen Aiper Intelligent Co., Ltd., Shenzhen 518131 (CN)
(72) Inventor: LIANG, Zhenzhen, Suzhou, 215128 (CN); PENG, Lingjie, Suzhou, 215128 (CN); ZHANG, Cheng, Suzhou, 215128 (CN); BAO, Liang, Suzhou, 215128 (CN)
(74) Representative: HGF

(57) **Abstract**

The present disclosure relates to a localizing method for a robotic pool cleaner and a robotic pool cleaner. The localizing method includes: controlling the robotic pool cleaner to walk along an edge of a swimming pool, and collecting edge data of the swimming pool and magnetometer data in a walking process; generating to-be-matched data based on the edge data of the swimming pool and direction information provided by a magnetometer; and matching the to-be-matched data with a saved swimming pool map to obtain current location information of the robotic pool cleaner in the swimming pool map. The present disclosure quickly matches the collected edge information of the swimming pool with the swimming pool map to achieve rapid localization.

## Description

### TECHNICAL FIELD

The present disclosure relates to the technical field of automatic control, and in particular, to a localizing method for a robotic pool cleaner and a robotic pool cleaner.

### BACKGROUND

Due to underwater operations and limitations in a manufacturing cost and underwater communication, a robotic pool cleaner often cannot carry a precise localizing device to obtain accurate absolute location information. Therefore, map data in a local coordinate system instead of a global coordinate system is often collected by the robotic pool cleaner. During an operation of the robotic pool cleaner after map collection, due to unknown initial location information of the robotic pool cleaner, the map data in the local coordinate system cannot be used to locate a current location of the robotic pool cleaner.

### SUMMARY

In order to solve at least one of the above technical problems, the present disclosure proposes a localizing method for a robotic pool cleaner and a robotic pool cleaner.

According to some embodiments of the present disclosure, a localizing method for a robotic pool cleaner is provided, including:
controlling the robotic pool cleaner to walk along an edge of a swimming pool, and collecting edge data of the swimming pool and magnetometer data in a walking process;
generating to-be-matched data based on the edge data of the swimming pool and the magnetometer data; and
matching the to-be-matched data with a saved swimming pool map to obtain current location information of the robotic pool cleaner in the swimming pool map.

In some possible implementations, the magnetometer data includes motion direction information of the robotic pool cleaner, direction information corresponding to the edge data of the swimming pool, or coordinate system information of the edge data of the swimming pool collected by a magnetometer.

In some possible implementations, the edge data of the swimming data includes distance information that is between the robotic pool cleaner and the edge of the swimming pool and collected by a distance sensor, point cloud data that is of the edge of the swimming pool and collected by a laser ladar, or image data that is of the edge of the swimming pool and collected by a camera.

In some possible implementations, the to-be-matched data has a same coordinate system as the swimming pool map.

In some possible implementations, the swimming pool map includes raw edge data of the swimming pool.

In some possible implementations, the robotic pool cleaner walks along the edge of the swimming pool for 1/5 to 3/2 of a circle or for 1 second to 60 seconds.

In some possible implementations, the edge data of the swimming pool further includes inertia measurement unit (IMU) data or wheel speedometer data.

In some possible implementations, the IMU data or the wheel speedometer data is used to calibrate the distance information, the point cloud data, or the image data.

In some possible implementations, a path of the robotic pool cleaner walking along the edge of the swimming pool includes at least one corner or turning path; and the to-be-matched data includes local map data of the swimming pool, local feature data of the swimming pool, or walking path information of the robotic pool cleaner.

In some possible implementations, the localizing method further includes: updating the swimming pool map based the edge data of the swimming pool.

According to some other embodiments of the present disclosure, a robotic pool cleaner is provided, where the robotic pool cleaner adopts the localizing method according to any one of the above embodiments for localization.

According to some other embodiments of the present disclosure, an electronic device is provided, including a processor and a memory, where the memory stores at least one instruction or at least one program segment, and the at least one instruction or the at least one program segment is loaded and executed by the processor to implement the above localizing method for a robotic pool cleaner.

According to some other embodiments of the present disclosure, a storage medium is provided, where the storage medium stores at least one instruction or at least one program segment, and the at least one instruction or the at least one program segment is loaded and executed by a processor to implement the above localizing method for a robotic pool cleaner.

According to some other embodiments of the present disclosure, a computer program product is provided, including a computer instruction, where the computer instruction is executed by a processor to implement the above localizing method for a robotic pool cleaner.

The following beneficial effects are achieved by implementing the embodiments of the present disclosure:

When the robotic pool cleaner has already saved a map, the present disclosure collects the local feature data of the swimming pool and quickly matches a local feature with the swimming pool map, to quickly obtain accurate location information of the robotic pool cleaner without a need for initial location information of the robotic pool cleaner. Moreover, because the swimming pool often has a regular or simple shape, which is mainly a rectangle, circle, or regular polygon, in order to prevent the collected local feature from being mismatched with the swimming pool map, this solution uses magnetometer information to identify a direction of the local feature, making the matching more efficient and accurate.

According to the following detailed descriptions of exemplary embodiments with reference to the accompanying drawings, other features and aspects of the present disclosure will become clear.

### BRIEF DESCRIPTION OF THE DRAWINGS

To describe the technical solutions and advantages in the embodiments of the present disclosure or in the prior art more clearly, the following briefly describes the accompanying drawings required for describing the embodiments or the prior art. Apparently, the accompanying drawings in the following description show some embodiments of the present disclosure, and a person of ordinary skill in the art may still derive other accompanying drawings from these accompanying drawings without creative efforts.
FIG. 1 is a step flowchart of a localizing method for a robotic pool cleaner according to an embodiment of the present disclosure;
FIG. 2 is a schematic diagram of a matching process of a localizing method according to an embodiment of the present disclosure;
FIG. 3 is a system block diagram of a robotic pool cleaner according to an embodiment of the present disclosure; and
FIG. 4 is a system block diagram of an electronic device according to an embodiment of the present disclosure.

### DETAILED DESCRIPTION

The technical solutions of the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

At present, a robotic pool cleaner carries a wheel speedometer, an IMU, and an obstacle recognition sensor including an ultrasonic ladar, a laser ladar, a camera, or a direct time-of-flight (DTOF) sensor. These devices are difficult to obtain accurate location information underwater, much more difficult than a real-time kinematic (RTK) localizing device and a global positioning system (GPS). Therefore, a map generated by the robotic pool cleaner through data collection belongs to a probability map, a feature map, or a map in a local coordinate system. When initial location information cannot be obtained, these maps cannot be used for real-time localization of the robotic pool cleaner.

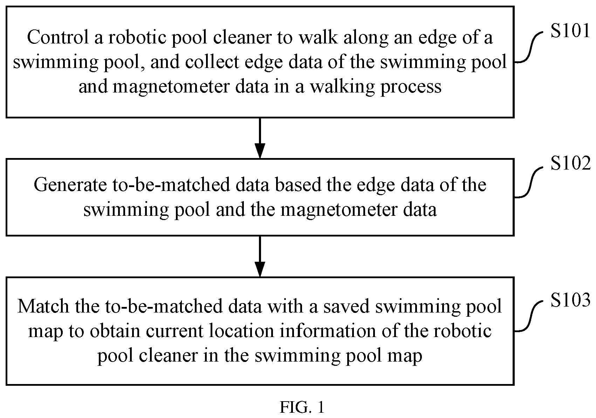

In order to solve the above problem, the embodiments of the present disclosure provide a localizing method for a robotic pool cleaner. FIG. 1 is a step flowchart of a localizing method for a robotic pool cleaner according to an embodiment of the present disclosure. The localizing method includes the following steps.

Step S101: A user throws the robotic pool cleaner into water; the robotic pool cleaner sinks to a water bottom at any location, automatically searches for a pool wall, and walks along the pool wall; and a sensor carried on a side face of the robotic pool cleaner controls the robotic pool cleaner to walk along an edge of a swimming pool, and collects edge data of the swimming pool in a walking process.

In this embodiment of the present disclosure, the sensor carried by the robotic pool cleaner includes the ultrasonic radar, the laser radar, the DTOF sensor, or the camera, and is configured to collect the edge data of the swimming pool. Data collected by a distance sensor includes distance information between the robotic pool cleaner and the pool wall, data collected by the laser radar includes point cloud data of the edge of the swimming pool, and data collected by the camera includes image data of the edge of the swimming pool. The above data is used to generate a feature map of the edge of the swimming pool, a local map, or walking path information of the robotic pool cleaner. The distance sensor includes but is not limited to the ultrasonic radar.

The robotic pool cleaner needs to walk along the edge of the pool for 1/5 to 3/2 of a circle or for 1 second to 60 seconds to ensure that sufficient edge features of the swimming pool are collected. If the swimming pool has complex and rich edge features, a walking distance or time can be reduced. In order to ensure richness of the collected data, a path of the robotic pool cleaner walking along the edge of the swimming pool can be limited to include at least one corner or turning path. If no corner or turning path is collected, the robotic pool cleaner will continue to walk until it walks for at least one circle.

The edge data of the swimming pool further includes IMU data and/ or wheel speedometer data. The IMU data or the wheel speedometer data is used to calibrate the distance information, the point cloud data, or the image data. For example, the wheel speedometer data is combined with the distance information to generate the feature map of the edge of the swimming pool, the local map, or the walking path information of the robotic pool cleaner. The IMU data is used to calibrate the feature map, the local map, or the walking path information.

In a data collection process of the robotic pool cleaner, the collected edge data of the swimming pool can also be updated to a historical swimming pool map, such that historical data is more accurate and timelier after being updated for a plurality of times.

The robotic pool cleaner internally stores historical map data of the edge of the swimming pool, and the above map includes the feature map, a probability map, or a map in a local coordinate system. The above map can also be downloaded to the robotic pool cleaner from a remote platform.

The robotic pool cleaner is also equipped with a magnetometer. The magnetometer (magnetic, M-sensor) is also known as a geomagnetic sensor or a magnetic sensor, and can be configured to test a strength and a direction of a magnetic field, and locate an orientation of a device. A principle of the magnetometer is similar to that of a compass, and the magnetometer can measure an included angle between a current device and each of eastern, southern, western, and northern directions.

Step S102: Generate to-be-matched data based the edge data of the swimming pool and magnetometer data.

Firstly, the feature map of the edge of the swimming pool, the local map, or the walking path information of the robotic pool cleaner is generated based on the collected edge information of the swimming pool and the collected magnetometer data. The feature map, the local map, or the walking path is used as the to-be-matched data.

Because the swimming pool often has a regular shape or a shape with a single feature, a plurality of locations of the swimming pool have same or similar features. If the edge data that is of the swimming pool and collected by the robotic pool cleaner is directly matched with a swimming pool map, there may be a mismatch. It is necessary to use the magnetometer data to annotate a motion direction that is of the robotic pool cleaner and corresponds to an edge feature, a direction corresponding to the edge data, or coordinate system information of the edge data. When a feature corresponding to the edge data that is of the swimming pool and collected by the robotic pool cleaner corresponds to a plurality of swimming pool maps, the motion direction that is of the robotic pool cleaner and corresponds to the edge feature, the direction corresponding to the edge data, or the coordinate system information of the edge data can help recognize a feature in the swimming pool map.

Therefore, the magnetometer data includes motion direction information of the robotic pool cleaner, direction information corresponding to the edge data of the swimming pool, or the coordinate system information of the edge data of the swimming pool collected by the magnetometer. The to-be-matched data includes local map data of the swimming pool, local feature data of the swimming pool, or the walking path information of the robotic pool cleaner.

Step S103: Match the to-be-matched data with a saved swimming pool map to obtain current location information of the robotic pool cleaner in the swimming pool map.

The to-be-matched data may include the local map data and feature data of the swimming pool, a motion path, and the like. The swimming pool map includes raw edge data of the swimming pool. During the matching, the feature data, a feature formed by the motion path, or a feature in the local map data of the swimming pool is directly compared with the edge feature of the swimming pool in data of the swimming pool map, and based on the magnetometer data, coordinate system unification is performed between the swimming pool map and the local map, the feature data, or the feature formed by the path. In a unified coordinate system, the feature of the collected edge data is quickly matched to an edge feature of the swimming pool map. That is, the to-be-matched data has a same coordinate system as the swimming pool map.

If no coordinate system is used, the motion direction of the robotic pool cleaner or the direction corresponding to the edge data can be obtained based on the magnetometer data, and these directions are matched with a motion direction corresponding to the feature in the swimming pool map or a data location direction, so as to quickly match the edge feature that is of the swimming pool and collected by the robotic pool cleaner to a corresponding edge feature in the swimming pool map. After the matching, a location of an end point of the collected edge feature in the corresponding swimming pool map represents a current location of the robotic pool cleaner.

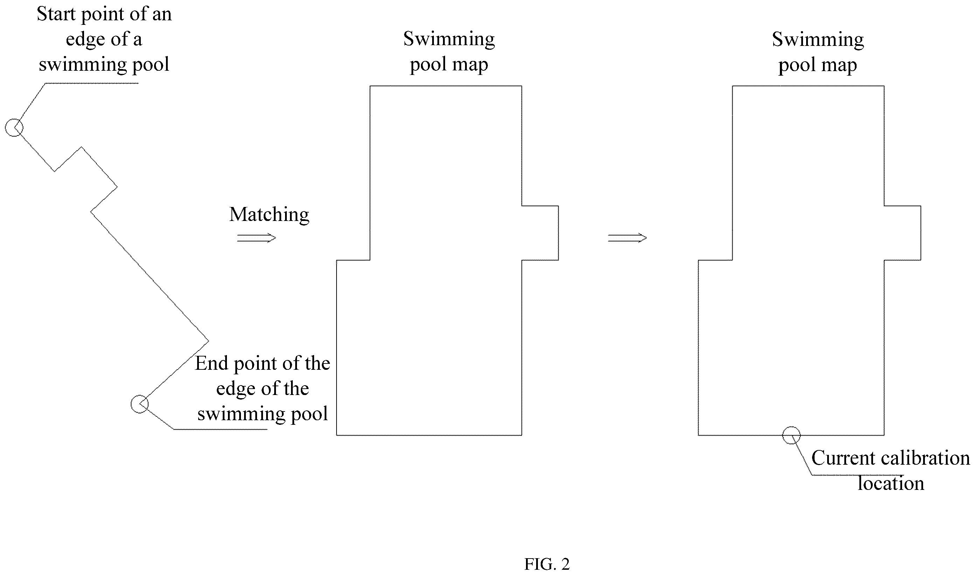

For example, FIG. 2 is a schematic diagram of a matching process of a localizing method according to an embodiment of the present disclosure.

The above embodiments have described the localizing method for a robotic pool cleaner in detail. The following beneficial effects are achieved by implementing the embodiments of the present disclosure:

When the robotic pool cleaner has already saved the map, the local feature data of the swimming pool is collected, and the local feature is quickly matched with the swimming pool map, to quickly obtain accurate location information of the robotic pool cleaner without a need for initial location information of the robotic pool cleaner. Moreover, because the swimming pool often has the regular or simple shape, which is mainly a rectangle, circle, or regular polygon, in order to prevent the collected local feature from being mismatched with the swimming pool map, this solution uses magnetometer information to identify a direction of the local feature, making the matching more efficient and accurate.

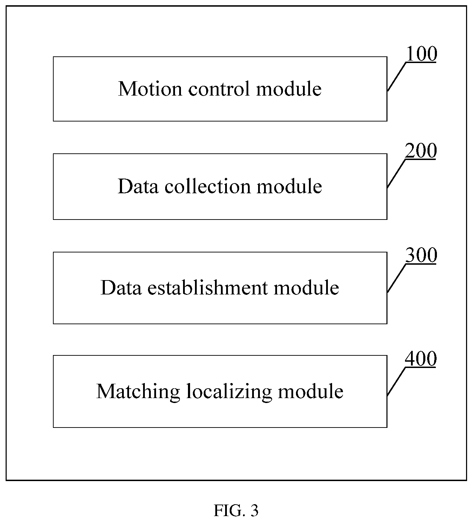

The embodiments of the present disclosure further provide a robotic pool cleaner. The robotic pool cleaner adopts the localizing method according to any one of the above embodiments for localization Specifically, referring to FIG. 3, the robotic pool cleaner is equipped with:
a motion control module 100 configured to control the robotic pool cleaner to walk along an edge of a swimming pool;
a data collection module 200 configured to collect edge data of the swimming pool and magnetometer data in a walking process of the robotic pool cleaner;
a data establishment module 300 configured to generate to-be-matched data based the collected edge data of the swimming pool and the collected magnetometer data; and
a matching localizing module 400 configured to match the to-be-matched data with a saved swimming pool map to obtain current location information of the robotic pool cleaner in the swimming pool map.

The embodiments of the present disclosure further provide an electronic device, including a processor and a memory. The memory stores at least one instruction or at least one program segment, and the at least one instruction or the at least one program segment is loaded and executed by the processor to implement the above localizing method for a robotic pool cleaner.

The memory may be configured to store software programs and modules, and the processor executes various functional applications and data processing by running the software programs and modules stored in the memory. The memory may mainly include a program storage area and a data storage area. The program storage area may store an operating system, an application required by a function, and the like. The data storage area may store data that is created based on use of the device, and the like. In addition, the memory may include a high-speed random access memory, and may further include a non-volatile memory, for example, at least one hard disk storage device, a flash storage device, or another volatile solid-state storage device. Correspondingly, the memory may further include a memory controller to provide access to the memory by the processor.

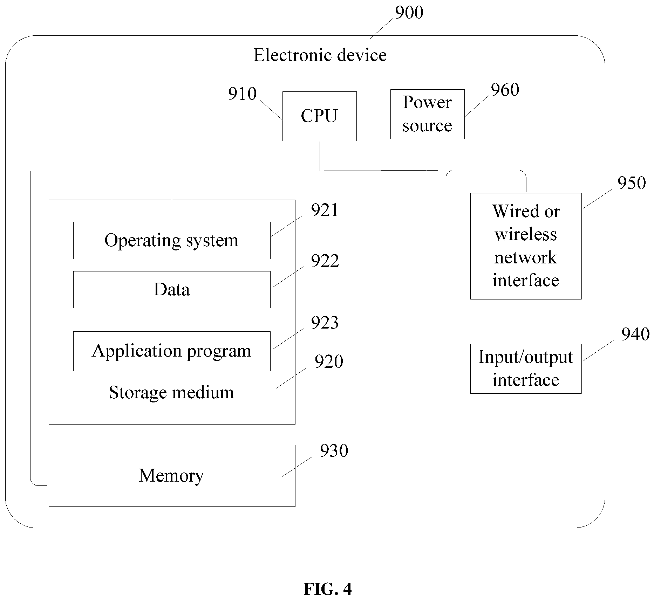

The method embodiments provided in the embodiments of the present disclosure can be executed in an electronic device such as a mobile terminal, a computer terminal, a server, or a similar arithmetic device. FIG. 4 shows an electronic device according to an embodiment of the present disclosure. As shown in FIG. 4, the electronic device 900 may vary greatly due to different configurations or performance, and may include at least one central processing unit (CPU) 910 (which may include but is not limited to a processing apparatus such as a microprocessor like a microprogrammed control unit (MCU) or a programmable logic device like a field-programmable gate array (FPGA)), a memory 930 for storing data, and at least one storage medium 920 for storing an application program 923 or data 922 (such as at least one mass storage device). The memory 930 and the storage medium 920 may be transitory or persistent memories. A program stored in the storage medium 920 may include at least one module, and each module may include a series of instruction operations on the electronic device. Furthermore, the CPU 910 can be set to communicate with the storage medium 920 and execute a series of instruction operations in the storage medium 920 on the electronic device 900. The electronic device 900 may also include at least one power source 960, at least one wired or wireless network interface 950, at least one input/output interface 940, and/or at least one operating system 921, such as Windows ServerTM, Mac OS XTM, UnixTM, LinuxTM, and FreeBSDTM.

The input/output interface 940 can be configured to receive or send data via a network. A specific example of the above network may include a wireless network provided by a communication provider of the electronic device 900. In an example, the input/output interface 940 includes a network interface controller (NIC), which can be connected to another network device through a base station to communicate with the Internet. In an example, the input/output interface 940 may be a radio frequency (RF) module, which is configured to communicate with the Internet in a wireless manner.

A person of ordinary skill in the art can understand that a structure shown in FIG. 4 is only illustrative and does not limit a structure of the above electronic device. For example, the electronic device 900 may also include more or fewer components than those shown in FIG. 4, or have a configuration different from that shown in FIG. 4.

The embodiments of the present disclosure further provide a storage medium. The storage medium stores at least one instruction or at least one program segment. The at least one instruction or the at least one program segment is loaded and executed by a processor to implement the above localizing method for a robotic pool cleaner.

The embodiments of the present disclosure further provide a computer program product, including a computer instruction. The computer instruction is executed by a processor to implement the above localizing method for a robotic pool cleaner.

The embodiments of the present disclosure have been described above, and the above description is exemplary and not exhaustive, and is not limited to the disclosed embodiments. It is apparent to those skilled in the art that many modifications and changes may be made without departing from the scope and spirit of the described embodiments. The terms used herein are selected to best explain principles of the embodiments, practical applications, or improvements to technologies in the market, or to enable other persons of ordinary skill in the art to understand the embodiments disclosed herein.

## Claims

1. A localizing method for a robotic pool cleaner, comprising:
controlling the robotic pool cleaner to walk along an edge of a swimming pool, and collecting edge data of the swimming pool and magnetometer data in a walking process;
generating to-be-matched data based on the edge data of the swimming pool and the magnetometer data; and
matching the to-be-matched data with a saved swimming pool map to obtain current location information of the robotic pool cleaner in the swimming pool map.

2. The localizing method according to claim 1, wherein the magnetometer data comprises motion direction information of the robotic pool cleaner, direction information corresponding to the edge data of the swimming pool, or coordinate system information of the edge data of the swimming pool collected by a magnetometer.

3. The localizing method according to claim 2, wherein the edge data of the swimming pool comprises distance information that is between the robotic pool cleaner and the edge of the swimming pool and collected by a distance sensor, point cloud data that is of the edge of the swimming pool and collected by a laser ladar, or image data that is of the edge of the swimming pool and collected by a camera.

4. The localizing method according to claim 3, wherein the to-be-matched data has a same coordinate system as the swimming pool map.

5. The localizing method according to claim 4, wherein the swimming pool map comprises raw edge data of the swimming pool.

6. The localizing method according to claim 5, wherein the robotic pool cleaner walks along the edge of the swimming pool for 1/5 to 3/2 of a circle or for 1 second to 60 seconds.

7. The localizing method according to claim 3, wherein the edge data of the swimming pool further comprises inertia measurement unit (IMU) data or wheel speedometer data.

8. The localizing method according to claim 7, wherein the IMU data or the wheel speedometer data is used to calibrate the distance information, the point cloud data, or the image data.

9. The localizing method according to claim 7, wherein a path of the robotic pool cleaner walking along the edge of the swimming pool comprises at least one corner or turning path; and the to-be-matched data comprises local map data of the swimming pool, local feature data of the swimming pool, or walking path information of the robotic pool cleaner.

10. The localizing method according to claim 9, further comprising: updating the swimming pool map based on the edge data of the swimming pool.

11. A robotic pool cleaner, wherein the robotic pool cleaner adopts the localizing method according to any one of claims 1 to 10 for localization.
